# EUROPEAN PATENT APPLICATION

(11) **EP 2 706 798 A1**
(43) Date of publication of application: **12.03.2014**
(21) Application number: 12779441.0
(22) Date of filing: 24.04.2012
(51) Int. Cl.: H04W 72/04

(54) **WIRELESS BASE STATION DEVICE, USER TERMINAL DEVICE, WIRELESS COMMUNICATION SYSTEM, AND WIRELESS COMMUNICATION METHOD**

(30) Priority: 02.05.2011 JP 2011103070
(71) Applicant: NTT DOCOMO, INC., Chiyoda-ku Tokyo 100-6150 (JP)
(72) Inventor: NAGATA, Satoshi, Tokyo 100-6150 (JP); ABE, Tetsushi, Tokyo 100-6150 (JP); KISHIYAMA, Yoshihisa, Tokyo 100-6150 (JP); TAKEDA, Kazuaki, Tokyo 100-6150 (JP)
(74) Representative: HOFFMANN EITLE
(86) International application number: PCT/JP2012/060977
(87) International publication number: WO 2012/150685

(57) **Abstract**

To provide a radio base station apparatus that enables the effect of improving usage efficiency of radio resources to be exerted sufficiently also in the case where the number of user terminals multiplexed into the same radio resources further increases, the radio base station apparatus performs communications using a first resource region for a downlink control channel subj ected to time division, and a second resource region for a downlink data channel, and is characterized by being provided with generation sections (307, 308) that generate a first notification signal for notifying of the number of OFDM symbols of the first resource region, and a second notification signal for notifying of a starting position in the time domain of a third resource region obtained by performing frequency division on a part of the second resource region, and a multiplexing section (312) that multiplexes the first notification signal into the first resource region, and the second notification signal into the third resource region.

## Description

### Technical Field

The present invention relates to a radio base station apparatus, user terminal apparatus, radio communication system and radio communication method applicable to cellular systems and the like.

### Background Art

Currently, the 3GPP (Third Generation Partnership Project) has proceeded with the standardization of LTE-advanced (hereinafter, specifications of LTE Release 10 and subsequent specifications are collectively called "LTE-A") that is an evolved radio interface of LTE (Long Term Evolution) Release 8 specifications (hereinafter, referred to as LTE or Rel. 8). LTE-A is aimed at actualizing higher system performance than LTE while keeping backward compatibility with LTE.

In LTE, MIMO (Multi Input Multi Output) techniques are studied as radio communication techniques for improving spectral efficiency (for example, see Non-patent literature 1). In the MIMO techniques, the transmitter/receiver is provided with a plurality of transmission/reception antennas, and simultaneously transmits different transmission information sequences from different transmission antennas. The receiver side exploits the fact that different fading variations occur in between transmission and reception antennas, and divides the simultaneously-transmitted information sequences to detect. In the MIMO techniques, it is possible to increase spectral efficiency by transmitting and receiving different information sequences at the same frequencies and the same time.

Specified as the MIMO techniques is Single User MIMO (SU-MIMO) transmission in which information sequences to a single user are transmitted from a plurality of transmission antennas and Multiple User MIMO (MU-MIMO) transmission in which information sequences to a plurality of users are transmitted from a plurality of transmission antennas. In downlink MU-MIMO transmission, different information sequences to a plurality of user terminal apparatuses are transmitted from a plurality of transmission antennas provided in a radio base station apparatus at the same frequencies and the same time. Thus, in MU-MIMO transmission, it is possible to increase the number of user terminals to multiplex into the same radio resources (frequencies and time), and it is thereby possible to increase usage efficiency of radio resources.

### Citation list

### Non-patent literature

[Non-patent literature 1] 3GPP TR 25.913 "Requirements for Evolved UTRA and Evolved UTRAN"

### Summary of the Invention

### Technical problem

In successor systems (for example, Rel.9, Rel.10) to LTE, it has been studied applying above-mentioned MU-MIMO transmission to Hetnet (Heterogeneous network) and CoMP (Coordinated Multi-Point) transmission. In the future systems, further increases are expected in the number of user terminals multiplied into the same radio resources. However, in conventional radio resource allocation methods, there is a fear that it is not possible to sufficiently exert the effect of improving usage efficiency of radio resources by increasing the number of user terminals multiplexed into the same radio resources.

The present invention was made in view of such a respect, and it is an object of the invention to provide a radio base station apparatus, user terminal apparatus, radio communication system and radio communication method that enable the effect of improving usage efficiency of radio resources to be exerted sufficiently also in the case where the number of user terminals multiplexed into the same radio resources further increases. Solution to problem

A radio base station apparatus of the invention is a radio base station apparatus that performs communications using a first resource region for a downlink control channel subjected to time division, and a second resource region for a downlink data channel, and is characterized by being provided with a generation section that generates a first notification signal for notifying of the number of OFDM symbols of the first resource region, and a second notification signal for notifying of a starting position in the time domain of a third resource region obtained by performing frequency division on a part of the second resource region, and a multiplexing section that multiplexes the first notification signal into the first resource region, and the second notification signal into the third resource region.

A user terminal apparatus of the invention is a user terminal apparatus that performs communications using a first resource region for a downlink control channel subjected to time division, and a second resource region for a downlink data channel, and is characterized by being provided with a demodulation section that demodulates a first notification signal for notifying of the number of OFDM symbols of the first resource region, and a second notification signal for notifying of a starting position in the time domain of a third resource region obtained by performing frequency division on a part of the second resource region, while demodulating a downlink control signal based on the first notification signal and the second notification signal each subjected to demodulation. Technical advantage of the invention

According to the invention, it is possible to provide a radio base station apparatus, user terminal apparatus, radio communication system and radio communication method that enable the effect of improving usage efficiency of radio resources to be exerted sufficiently also in the case where the number of user terminals multiplexed into the same radio resources further increases.

### Brief Description of the Drawings

FIG. 1 is a schematic view illustrating a radio communication system to which MU-MIMO transmission is applied;
FIG. 2 is a diagram illustrating one example of a subframe to which MU-MIMO transmission is applied;
FIG. 3 is a diagram illustrating PDSCH and PDCCH undergoing time division multiplexing and frequency division multiplexing;
FIG. 4 is a diagram to explain a PDCCH region on a downlink physical channel;
FIG. 5 contains diagrams to explain a time region (enhanced PDCCH region) in which a PDCCH subjected to frequency division multiplexing in a time region for a PDSCH is transmitted;
FIG. 6 is a diagram to explain Aspect 1 for assigning a notification signal (enhanced PCFICH) to notify of a starting position of the enhanced PDCCH region;
FIG. 7 is a diagram to explain Aspect 2 for assigning a notification signal (enhanced PCFICH) to notify of a starting position of the enhanced PDCCH region;
FIG. 8 is a diagram to explain Aspect 3 for assigning a notification signal (enhanced PCFICH) to notify of a starting position of the enhanced PDCCH region;
FIG. 9 is a schematic view of a configuration of a radio communication system according to this Embodiment;
FIG. 10 is a block diagram to explain a configuration of a radio base station apparatus according to this Embodiment;
FIG. 11 is a block diagram to explain a configuration of a user terminal apparatus according to this Embodiment;
FIG. 12 is a functional block diagram of a baseband signal processing section that the radio base station apparatus has and a part of hither layer according to this Embodiment; and
FIG. 13 is a functional block diagram of a baseband signal processing section that the user terminal apparatus has according to this Embodiment.

### Description of embodiments

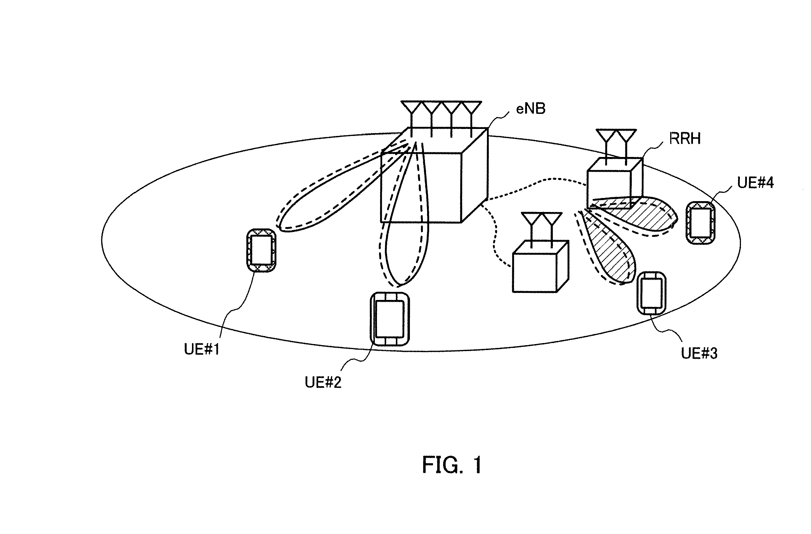

FIG. 1 is a schematic view of a radio communication system to which MU-MIMO transmission is applied. The radio communication system as show in FIG. 1 has a hierarchical configuration in which small base station apparatuses RRHs (Remote Radio Heads) each having a local coverage area are provided in a coverage area of a radio base station apparatus eNB (eNodeB). In downlink MU-MIMO transmission in such a radio communication system, data to a plurality of user terminal apparatuses UEs (User Equipments) #1 and #2 is transmitted from a plurality of antennas of the radio base station apparatus eNB at the same time and the same frequencies. It is also possible to transmit data to a plurality of user terminal apparatuses UE #3 and UE #4 from a plurality of antennas of the small base station apparatus RRH at the same time and the same frequencies.

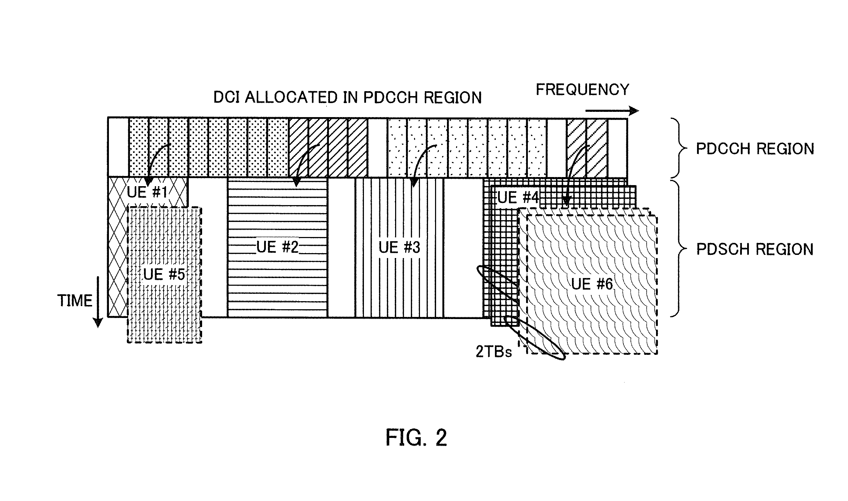

FIG. 2 is a diagram illustrating one example of a subframe to which downlink MU-MIMO transmission is applied. As shown in FIG. 2, in the radio communication system to which MU-MIMO transmission is applied, each subframe is provided with a time region (hereinafter, PDCCH region) for physical downlink control channels (PDCCHs) and a time region (hereinafter, PDSCH region) for physical downlink shared channels (PDSCHs). To the PDCCH region is mapped downlink control information (DCI) to user terminal apparatuses UEs #1 to #4 assigned to the PDSCH region.

As described above, in MU-MIMO transmission, it is possible to transmit data to a plurality of user terminal apparatuses UEs at the same time and same frequencies. Therefore, it is conceivable to multiplex data to a user terminal apparatus UE#5 into the same frequency region as the data to the user terminal apparatus UE#1 in the PDSCH region in FIG. 2. Similarly, it is conceivable to multiplex data to a user terminal apparatus UE#6 into the same frequency region as the data to the user terminal apparatus UE#4.

However, in the PDCCH region in FIG. 2, there is no vacant region allowed to map the downlink control information (DCI) to the user terminal apparatuses UE#5 and UE#6 thereto. Therefore, due to a lack of the PDCCH region, the number of user terminal apparatuses UEs multiplexed into the PDSCH region is limited. As a result, it is expected that it is not possible to sufficiently obtain the effect of improving throughput due to MU-MIMO transmission. Then, for example, it is conceivable to extend the assignment region of the PDCCH that conveys the downlink control information (DCI) to resolve the lack of the assignment region of the PDCCH, and prevent the effect of improving throughput due to MU-MIMO transmission from degrading.

Conceivable as the method of extending the PDCCH region are a method (time division approach) for extending the PDCCH region previously comprised of maximum 3 OFDM symbols from the beginning of the subframe to 4 OFDM symbols or more, and another method (frequency division approach) for performing frequency division on a part of the PDSCH to newly use as a PDCCH assignment region. In the latter frequency division approach, it is possible to perform beamforming for each user by performing demodulation using a user-specific reference signal (DM-RS), and it is thereby possible to obtain sufficient reception quality. Therefore, it is possible to decrease the aggregation level, and this method is particularly effective at resolving a lack of the PDCCH region.

However, even in performing frequency division on the PDSCH region to extend the PDCCH assignment region by the frequency division approach, the user terminal apparatus UE is not able to specify radio resources (OFDM symbol) into which the PDCCH is frequency-division multiplexed in the PDSCH region, and is not able to receive the PDCCH. The inventors of the invention noted the respect that the user terminal apparatus UE is not able to receive the PDCCH that is frequency-division multiplexed into radio resource (OFDM symbol) in the PDSCH region even in performing frequency division on the PDSCH region to extend the PDCCH assignment region.

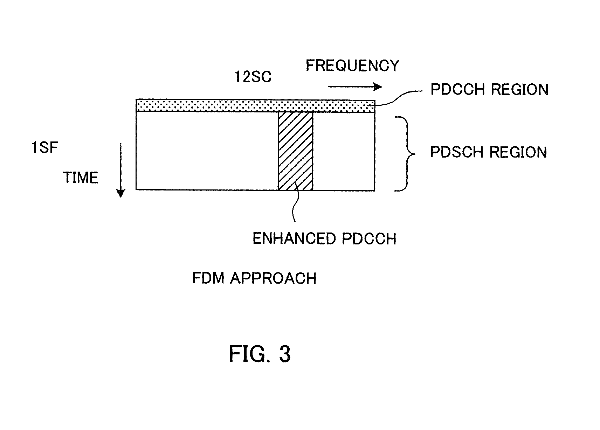

FIG. 3 is a diagram illustrating PDSCH and PDCCH undergoing time division multiplexing and frequency division multiplexing. In the radio communication system according to the invention, as shown in FIG. 3, used is a subframe having a PDSCH region and PDSCH region. The radio base station apparatus eNB performs frequency division multiplexing on the PDSCH and PDCCH in a part of resource region of the PDSCH region. Further, the radio base station apparatus eNB notifies the user terminal apparatus UE of a starting position in the time domain of the above-mentioned part of resource region into which the PDCCH is frequency-division multiplexed. The user terminal apparatus UE receives the frequency-division multiplexed PDCCH based on the notified starting position in the time domain.

In the radio communication system according to the invention, the PDSCH and PDCCH are frequency-division multiplexed in the above-mentioned PDSCH region. Therefore, in addition to the PDCCH region, it is possible to assign the PDCCH to a predetermined frequency region in a part of resource region of the PDSCH region. As a result, also when the number of user terminals multiplexed into the same radio resources increases, it is possible to sufficiently exert the effect of improving usage efficiency of radio resources.

Thus, in the case of assigning the PDCCH to a predetermined frequency region, it is necessary to notify a user terminal apparatus UE of a multiplexing starting position so that the user terminal apparatus UE is able to demodulate. In the radio communication system according to the invention, the radio base station apparatus eNB notifies the user terminal apparatus UE of a starting position in the time domain of the above-mentioned part of resource region into which the PDCCH is frequency-division multiplexed as described later. Therefore, the user terminal apparatus UE is capable of specifying the starting position of radio resources (OFDM symbol) into which the PDCCH and PDSCH are frequency-division multiplexed in the PDSCH region. By this means, in performing frequency division on the PDSCH region to extend the assignment region of the PDCCH, the user terminal is capable of demodulating the PDCCH frequency-division multiplexed into radio resources of the PDSCH region.

The radio communication system of the invention will be described below.

In the radio communication system of the invention, the radio base station apparatus eNB notifies a user terminal apparatus of a starting position in the time domain of a resource region (hereinafter, enhanced PDCCH region) assigned the PDCCH in the PDSCH region. The user terminal apparatus UE acquires the notified starting position information, and receives the PDCCH (hereinafter, may be called Enhanced PDCCH, UE-PDCCH or the like) multiplexed into the enhanced PDCCH region. In the radio communication system of the invention, a new PCFICH (hereinafter, enhanced PCFICH) (second notification signal) including a new CFI (Control Format Indicator) for the enhanced PDCCH region is defined as a notification signal for notifying of a starting position in the time domain of the enhanced PDCCH region.

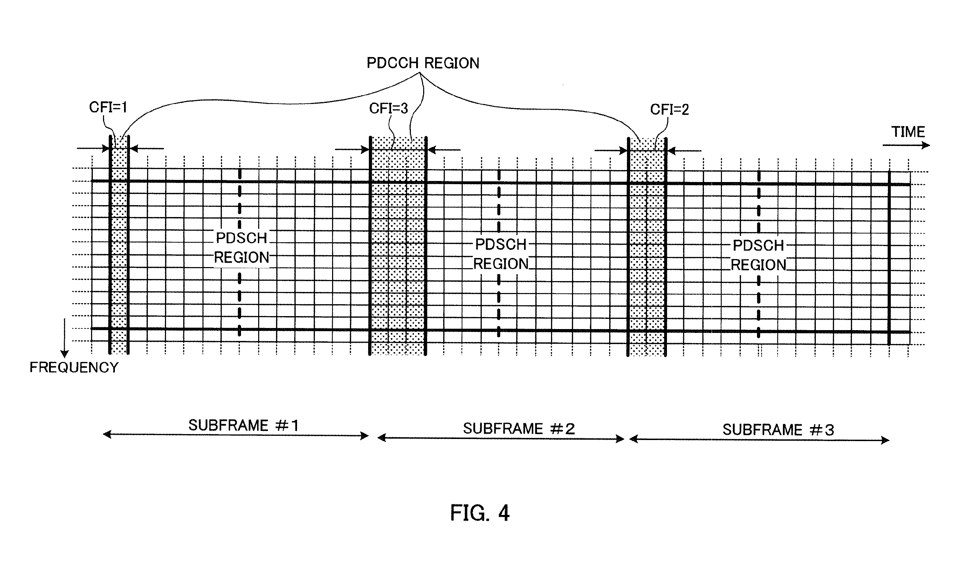

FIG. 4 is a diagram to explain the PDCCH region on the physical downlink channel. As shown in FIG. 4, each subframe is comprised of 14 OFDM symbols (1 ms). The PDCCH region that is a resource region for the PDCCH is comprised of maximum 3 OFDM symbols from the beginning of each subframe. The PDSCH region that is a resource region for the PDSCH is comprised of remaining OFDM symbols except the OFDM symbol constituting the PDCCH region.

As shown in FIG. 4, the number of OFDM symbols constituting the PDCCH region is variable in each subframe. For example, in FIG. 4, the PDCCH region of a subframe #1 is comprised of first one OFDM symbol, the PDCCH region of a subframe #2 is comprised of first three OFDM symbols, and the PDCCH region of a subframe #3 is comprised of first two OFDM symbols. The number of OFDM symbols constituting the PDCCH region in each subframe is specified by the CFI (Control Format Indicator). The CFI is 2-bit information (for example, 2-bit information that enables "1" to "3" to be identified) indicative of the number of first OFDM symbols constituting the control channel region, and is transmitted on the PCFICH (Physical Control Format Indicator Channel) (first notification signal). The PCFICH including the CFI is assigned to a first OFDM symbol of each subframe.

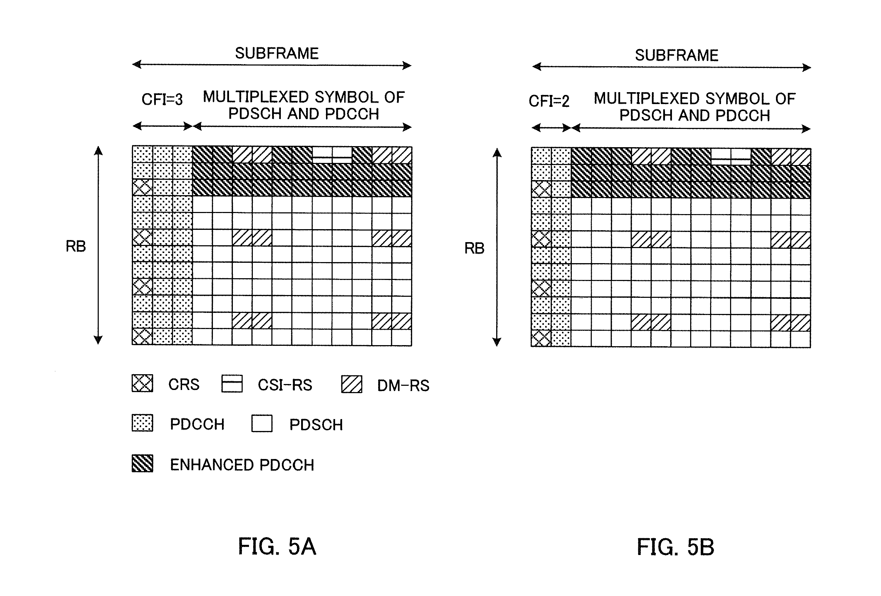

FIG. 5 contains diagrams to explain the enhanced PDCCH region. FIG. 5A shows an example of the enhanced PDCCH region when the PDCCH region is comprised of first three OFDM symbols (i.e. the case of CFI=3), and FIG. 5B shows an example of the enhanced PDCCH region when the PDCCH region is comprised of firs two OFDM symbols (i.e. the case of CFI=2). Each of FIGs. 5A and 5B shows one subframe including 14 OFDM symbols contiguous in the time domain, and one resource block including 12 subcarriers contiguous in the frequency domain. As shown in FIGS. 5A and 5B, in addition to the PDCCH region, the PDCCH is also assigned to the enhanced PDCCH region comprised of first to third subcarriers from the edge in the frequency domain of the PDSCH region. In other words, the PDCCH and PDSCH are frequency-division multiplexed in the PDSCH region.

### (Aspect 1)

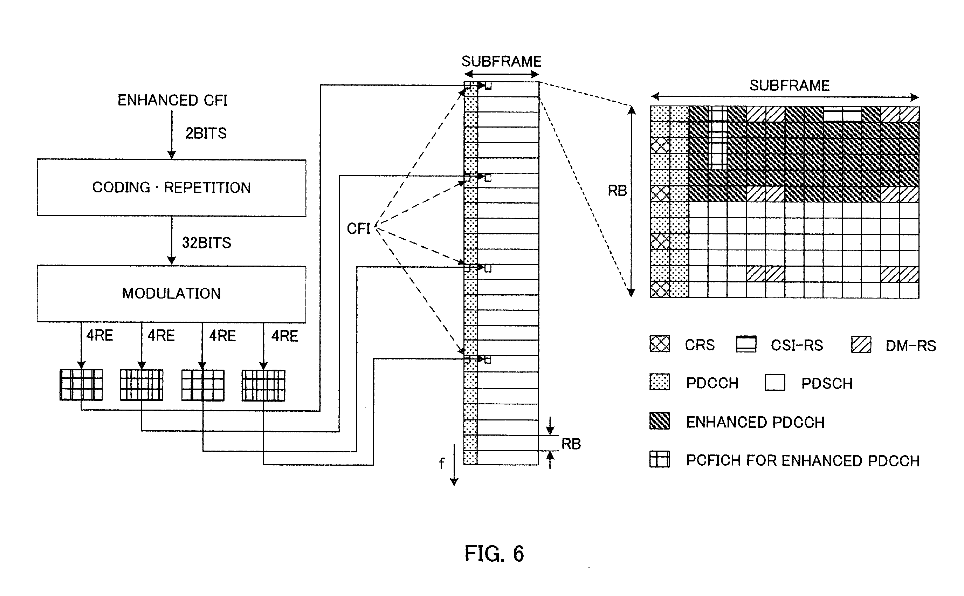

FIG. 6 is a diagram to explain Aspect 1 for assigning the enhanced PDCCH and enhanced PCFICH in a downlink signal. The resource diagram on the right side of FIG. 6 shows one subframe including 14 OFDM symbols contiguous in the time domain, and one resource block including 12 subcarriers contiguous in the frequency domain.

The new CFI (hereinafter, enhanced CFI) for enhanced PDCCH region notification as shown in FIG. 6 is 2-bit information indicative of an OFDM symbol that is a starting position in the time domain of the enhanced PDCCH region, and is generated in an enhanced CFI generating section in the radio base station apparatus. When the PDCCH region is comprised of first one OFDM symbol, the starting position of the enhanced PDCCH region is the second OFDM symbol from the subframe beginning. In this case, the enhanced CFI is set for a value indicative of the second OFDM symbol. When the PDCCH region is comprised of first two OFDM symbols, the starting position of the enhanced PDCCH region is the third OFDM symbol from the subframe beginning. In this case, the enhanced CFI is set for a value indicative of the third OFDM symbol. When the PDCCH region is comprised of first three OFDM symbols, the starting position of the enhanced PDCCH region is the fourth OFDM symbol from the subframe beginning. In this case, the enhanced CFI is set for a value indicative of the fourth OFDM symbol. In addition, illustrated herein is the case where the starting position of the enhanced PDCCH region is immediately after the PDCCH region, but the starting position of the enhanced PDCCH region may not be immediately after the PDCCH region. Further, the information amount of the enhanced CFI may be larger than 2 bits.

As shown in FIG. 6, the enhanced CFI is provided with redundancy by coding · repetition (Simplex coding and Repetition coding), transformed into a sequence of 16 symbols (32 bits), then modulated, and is assigned to a predetermined region (hereinafter, enhanced PCFICH region) including the fourth and subsequent OFDM symbols from the subframe beginning. The enhanced PCFICH including the enhanced CFI is allocated to the system band on a basis of REG with the sequence of 16 symbols separated into four resource element groups (REGs). The enhanced PCFICH is transmitted using total 16 resource elements (REs). For example, as shown in FIG. 6, each REG is allocated to the system band equally (in FIG. 6, every six resource blocks) . By thus allocating the enhanced PCFICH to the system band equally, it is possible to obtain large signal gain by frequency diversity.

The enhanced PCFICH region assigned the enhanced PCFICH is provided at the fourth OFDM symbol of a subframe. Four symbols of each REG constituting the enhanced PCFICH are assigned to four resource elements of the same time (fourth OFDM symbol) with different frequencies in the same resource block. In other words, four symbols of each REG constituting the enhanced PCFICH are assigned to four resource elements of the same time (fourth OFDM symbol) with different frequencies in the same unit resource region (region indicated by one subframe and one resource block) .

Thus, by providing the enhanced PCFICH at the fourth OFDM symbol of the subframe, it is possible to assign the enhanced PCFICH while avoiding the first to third OFDM symbols having the possibility of PDCCH assignment. In addition, allocation of the enhanced PCFICH region is not limited thereto. It is essential only that the enhanced PCFICH region is provided at an OFDM symbol after the OFDM symbol assigned the PDCCH. The enhanced PCFICH region is only required to be allocated at the fourth OFDM symbol or subsequent symbol of the subframe.

In the resource diagram on the right side of FIG. 6, the PDCCH region is comprised of first two OFDM symbols, and the PDSCH region is comprised of the time region of the third and subsequent OFDM symbols from the beginning. The enhanced PDCCH region is comprised of the frequency region of six subcarriers contiguous in the frequency in the PDSCH region. The PDCCH is assigned to regions except the reference signal (CRS) assignment region, PCFICH assignment region, etc. in the PDCCH region. The enhanced PDCCH is assigned to regions except the reference signal (CSI-RS,DM-RS) assignment region, enhanced PCFICH assignment region, etc. in the enhanced PDCCH region. The PDSCH is assigned to regions except the reference signal (DM-RS) assignment region, enhanced PDCCH assignment region, etc. in the PDSCH region.

Also in the case of providing the enhanced PDCCH region, it is necessary to notify the user terminal apparatus of the number of first OFDM symbols constituting the PDCCH region. Therefore, the PCFICH including the CFI is assigned to the first OFDM symbol of the control channel region of each subframe. In the radio communication method of the invention, the PCFICH and enhanced PCFICH are both assigned to the downlink resource region.

When the radio base station apparatus transmits the above-mentioned downlink signal, the user terminal receives the signal to demodulate the enhanced PCFICH. The enhanced CFI included in the enhanced PCFICH indicates an OFDM symbol that is a starting position in the time domain of the enhanced PDCCH region. Therefore, the user terminal apparatus is capable of specifying the starting position of the enhanced PDCCH from the enhanced CFI that the enhanced PCFICH includes, and of acquiring the DCI to the user terminal apparatus.

As described above, the enhanced PCFICH is assigned to the fourth OFDM symbol or subsequent OFDM symbol of the subframe. Therefore, for example, as shown in the resource diagram on the right side of FIG. 6, when the starting position of the enhanced PDCCH region is before the third OFDM symbol of the subframe, the enhanced PDCCH region has already started at timing of receiving the enhanced PCFICH. Therefore, when the starting position of the enhanced PDCCH region is before reception timing of the enhanced PCFICH, the user terminal apparatus backs to the starting position of the enhanced PDCCH region to read the enhanced PDCCH region. The user terminal apparatus stores the resource information before reception timing of the enhanced PCFICH in a storage section.

### (Aspect 2)

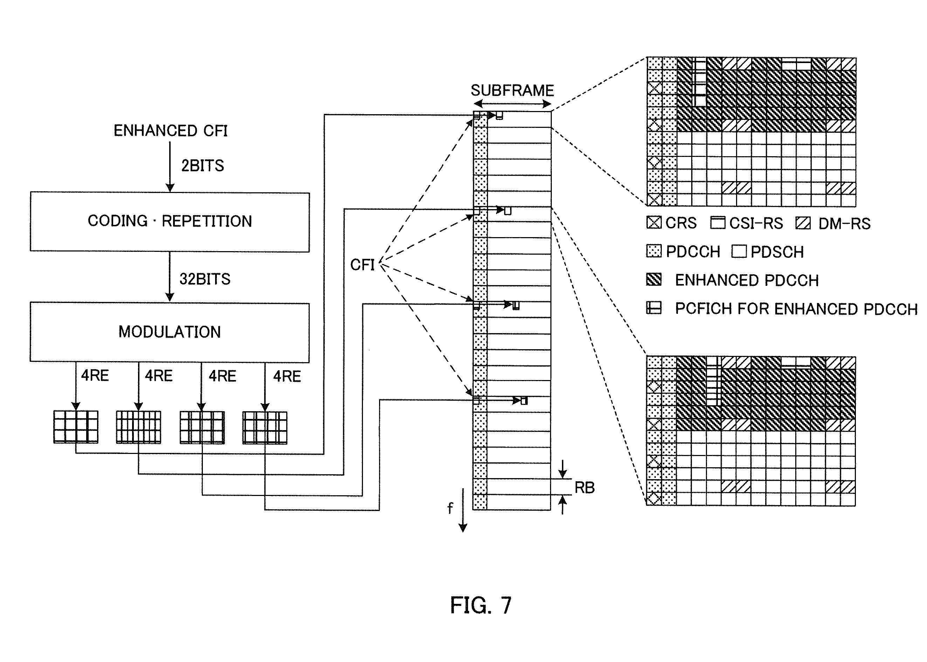

FIG. 7 is a diagram to explain Aspect 2 for assigning the enhanced PDCCH and enhanced PCFICH in a downlink signal. The resource diagram on the right side of FIG. 7 shows one subframe including 14 OFDM symbols in the time domain, and one resource block including 12 subcarriers in the frequency domain.

Also in the case as shown in FIG. 7, the enhanced PCFICH is assigned to be distributed over the system band. More specifically, in FIG. 7, four REGs constituting the enhanced PCFICH are distributed and allocated every six resource blocks of the system band. Each REG is assigned to the fourth or subsequent different OFDM symbol in a plurality of resource blocks. Each REG is assigned to the fourth or subsequent different OFDM symbol from the beginning of the subframe in a plurality of unit resource regions (region indicated by one subframe and one resource block).

More specifically, the enhanced PCFICH region corresponding to the first REG is provided at the fourth OFDM symbol of the subframe. The enhanced PCFICH region corresponding to the second REG is provided at the fifth OFDM symbol of the subframe. The enhanced PCFICH region corresponding to the third REG is provided at the sixth OFDM symbol of the subframe. The enhanced PCFICH region corresponding to the fourth REG is provided at the seventh OFDM symbol of the subframe.

Also in this case, the user terminal apparatus is capable of specifying the starting position of the enhanced PDCCH from the enhanced PCFICH (enhanced CFI), and of acquiring the DCI to the user terminal apparatus. In this case, since the enhanced PCFICHs are assigned to be over a plurality of different symbols, it is possible to obtain further larger signal gain by frequency diversity and time diversity.

In addition, as long as each REG of the enhanced PCFICH is assigned to the fourth or subsequent different OFDM symbol in a plurality of resource blocks, the REG does not need to be assigned to contiguous OFDM symbols such as the fourth to seventh OFDM symbols. As long as the REG is assigned to two or more OFDM symbols that are different time-wise, all REGs do not need to be assigned to OFDM symbols that are different time-wise.

### (Aspect 3)

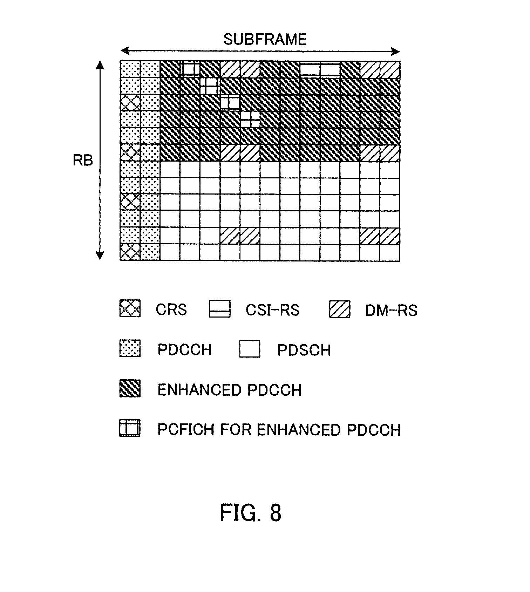

FIG. 8 is a diagram to explain Aspect 3 for assigning the enhanced PDCCH and enhanced PCFICH in a downlink signal. The resource diagram of FIG. 8 shows one subframe including 14 OFDM symbols in the time domain, and one resource block including 12 subcarriers in the frequency domain.

Also in the case as shown in FIG. 8, the enhanced PCFICH is assigned to be distributed over the system band. In the case as shown in FIG. 8, four symbols of each REG constituting the enhanced PCFICH are assigned to four resource elements different in time and frequency in the same resource block. In other words, four symbols of each REG constituting the enhanced PCFICH are assigned to four resource elements different in time and frequency in the same unit resource region (region indicated by one subframe and one resource block).

More specifically, the enhanced PCFICH region corresponding to the first symbol is provided in a resource element corresponding to the fourth OFDM symbol and the first subcarrier. The enhanced PCFICH region corresponding to the second symbol is provided in a resource element corresponding to the fifth OFDM symbol and the second subcarrier. The enhanced PCFICH region corresponding to the third symbol is provided in a resource element corresponding to the sixth OFDM symbol and the third subcarrier. The enhanced PCFICH region corresponding to the fourth symbol is provided in a resource element corresponding to the seventh OFDM symbol and the fourth subcarrier.

Also in this case, the user terminal apparatus is capable of specifying the starting position of the enhanced PDCCH from the enhanced PCFICH (enhanced CFI), and of acquiring the DCI to the user terminal apparatus. In this case, since the enhanced PCFICHs are assigned to be over different symbols and different subcarriers, it is possible to obtain further larger signal gain by frequency diversity and time diversity.

IAs long as each symbol constituting the enhanced PCFICH is assigned to the fourth or subsequent different OFDM symbol in the same resource block, the symbol does not need to be assigned to contiguous OFDM symbols such as the fourth to seventh OFDM symbols. As long as the symbol is assigned to two or more different OFDM symbols, all symbols each constituting the enhanced PCFICH do not need to be assigned to different OFDM symbols. As long as each symbol constituting the enhanced PCFICH is assigned to two or more different subcarriers, the symbol does not need to be assigned to contiguous subcarriers. All symbols each constituting the enhanced PCFICH do not need to be assigned to different subcarriers.

In Aspect 1 of enhanced PCFICH assignment, the enhanced PCFICH including the enhanced CFI generated in the enhanced CFI generating section in the radio base station is assigned to the fourth (or subsequent) OFDM symbol from the beginning of a subframe. The user terminal apparatus demodulates the enhanced PCFICH to specify the assignment starting position of the enhanced PDCCH, and demodulates the enhanced PDCCH to acquire the DCI. By this means, it is possible to perform communications using the enhanced PDCCH with the assignment region for downlink control channels extended.

In Aspect 2 of enhanced PCFICH assignment, each REG of the enhanced PCFICH is assigned to the fourth or subsequent different OFDM symbol in a plurality of resource blocks. The user terminal apparatus demodulates the enhanced PCFICH to specify the assignment starting position of the enhanced PDCCH, and demodulates the enhanced PDCCH to acquire the DCI. By this means, it is possible to perform communications using the enhanced PDCCH with the assignment region for downlink control channels extended.

In Aspect 3 of enhanced PCFICH assignment, a plurality of symbols of each REG constituting the enhanced PCFICH are assigned to a plurality of resource elements (the fourth and subsequent from the beginning of a subframe) that are different in time and frequency in the same resource block. The user terminal apparatus demodulates the enhanced PCFICH to specify the start assignment position of the enhanced PDCCH, and demodulates the enhanced PDCCH to acquire the DCI. By this means, it is possible to perform communications using the enhanced PDCCH with the assignment region for downlink control channels extended.

In addition, it is possible to combine above-mentioned Aspects 1 to 3 appropriately to use.

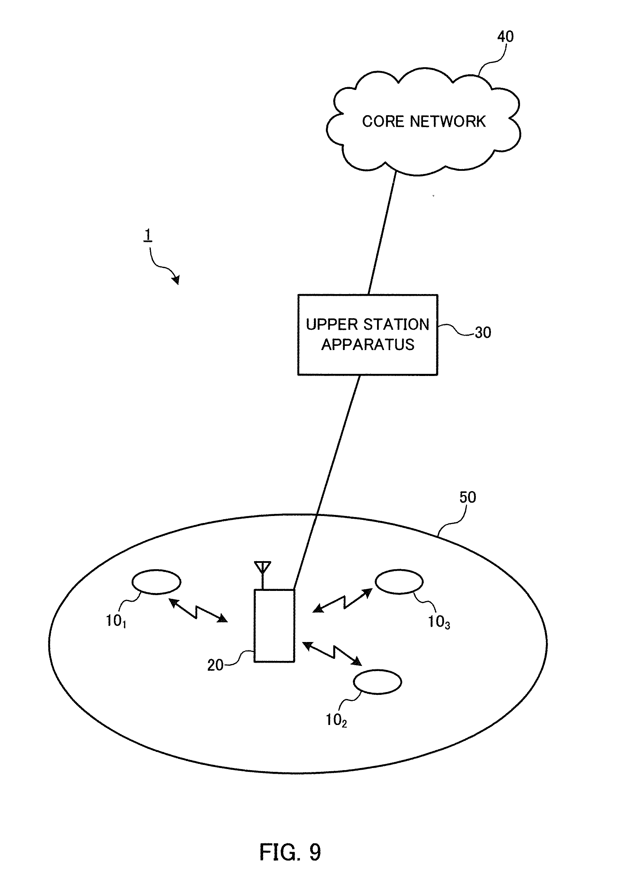

A radio communication system according to this Embodiment will specifically be described below. FIG. 9 is a schematic view illustrating a radio communication system 1 according to this Embodiment. In addition, the radio communication system 1 as shown in FIG. 9 supports LTE-A.

As shown in FIG. 9, the mobile communication system 1 includes the radio base station apparatus 20 and a plurality of user terminal apparatuses 10 (10₁, 10₂, 10₃,...10ₙ, n is an integer where n>0) that communicate with the radio base station apparatus 20, and is comprised thereof. The radio base station apparatus 20 is connected to an upper station apparatus 30, and the upper station apparatus 30 is connected to a core network 40. The user terminal apparatuses 10 are capable of communicating with the radio base station apparatus 20 in a cell 50.

In addition, for example, the upper station apparatus 30 includes an access gateway apparatus, Radio Network Controller (RNC), Mobility Management Entity (MME) and the like, but is not limited thereto. The upper station apparatus 30 may be included in the core network 40.

Each of the user terminal apparatuses (10₁, 10₂, 10₃,...10ₙ) is an LTE-A terminal apparatus unless otherwise specified, but is capable of including a LTE terminal apparatus. Further, for convenience in description, the description is given while assuming that equipment which performs radio communications with the radio base station apparatus 20 is the user terminal apparatus 10, and more generally, the equipment may be user equipment (UE) including user terminal apparatuses and fixed terminal apparatuses.

In the mobile communication system 1, as a radio access scheme, OFDMA (Orthogonal Frequency Division Multiple Access) is applied in downlink. Meanwhile, applied in uplink are SC-FDMA (Single-Carrier Frequency Division Multiple Access) and Clustered DFT spreading OFDM.

OFDMA is a multicarrier scheme for dividing a frequency band into a plurality of narrow frequency bands (subcarriers), and mapping data to each subcarrier to perform communications. SC-FDMA is a single-carrier transmission scheme for dividing the system band into bands comprised of a single or consecutive resource blocks for each terminal apparatus so that a plurality of terminal apparatuses uses mutually different bands, and thereby reducing interference among the terminal apparatuses. Clustered DFT spreading OFDM is a scheme for assigning a group (cluster) of non-contiguous clustered subcarriers to a single user terminal apparatus UE, applying discrete Fourier transform spreading OFDM to each cluster, and thereby actualizing multiple access in uplink.

Described herein is a communication channel configuration defined in LTE-A. In downlink, used are the PDSCH shared among the user terminal apparatuses 10, and downlink L1/L2 control channels (PDCCH, PCFICH, PHICH). User data (including higher-layer control signal) i.e. normal data signals are transmitted on the PDSCH. Transmission data is included in the user data. In addition, a base frequency block (CC) assigned to the user terminal apparatus 10 in the radio base station apparatus 20 and scheduling information is notified to the user terminal apparatus 10 on the downlink control channel.

The higher-layer control signal includes RRC signaling to notify the user terminal apparatus 10 of addition/deletion in the number of carrier aggregation, and the radio access scheme (SC-FDMA/Clustered DFT spreading OFDM) in uplink applied to each component carrier. Further, when the user terminal apparatus 10 controls the starting position of the search space based on the information notified from the radio base station apparatus 20, such a configuration may be made that the user terminal apparatus 10 is notified of information (for example, constant K or the like) on a control equation for determining the starting position of the search space by RRC signaling. In this case, such a configuration may be made that an offset value n_{cc} specific to the base frequency block is notified at the same time by RRC signaling.

In uplink, used are the PUSCH shared among the user terminal apparatuses 10, and the PUCCH that is a control channel in uplink. User data is transmitted on the PUSCH. Downlink CSI (CQI/PMI/TI), ACK/NACK and the like are transmitted on the PUCCH. Further, in SC-FDMA, intra-subcarrier frequency hopping is applied.

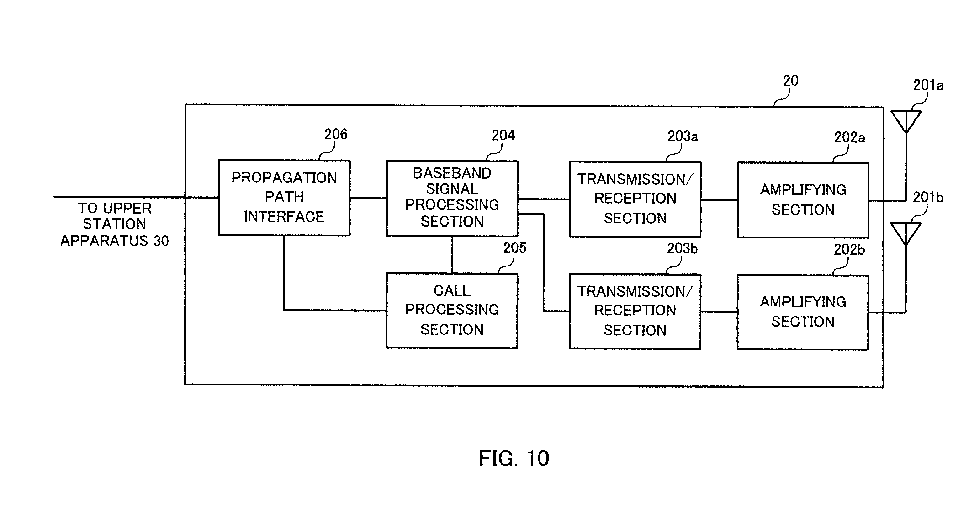

FIG. 10 is a block diagram to explain a configuration of the radio base station apparatus 20 according to this Embodiment. The radio base station apparatus 20 is provided with a plurality of transmission/reception antennas 201a and 201b for MIMO transmission, amplifying sections 202a and 202b, transmission/reception sections 203a and 203b, baseband signal processing section 204, call processing section 205 and transmission path interface 206.

The user data to transmit from the radio base station apparatus 20 to the user terminal apparatus 10 is input to the baseband signal processing section 204 via the transmission path interface 206 from the upper station apparatus 30 of the radio base station apparatus 20.

The baseband signal processing section 204 performs PDCP layer processing such as addition of the sequence number, segmentation and concatenation of the user data, RLC (Radio Link Control) layer transmission processing such as transmission processing of RLC retransmission control, MAC (Medium Access Control) retransmission control e.g. HARQ transmission processing, scheduling, transmission format selection, channel coding, Inverse Fast Fourier Transform (IFFT) processing and precoding processing.

The baseband signal processing section 204 notifies the user terminal apparatus 10 of control information for radio communications in the cell 50 on the broadcast channel. For example, the control information for communications in the cell 50 includes the system bandwidth in uplink or downlink, resource block information assigned to the user terminal apparatus 10, precoding information for precoding in the user terminal apparatus 10, identification information (Root Sequence Index) of a root sequence to generate a signal of a random access preamble on the PRACH (Physical Random Access CHannel), etc.

Each of the transmission/reception sections 203a and 203b converts the frequency of the baseband signal, which is subjected to precoding for each antenna and is output from the baseband signal processing section 204, into a radio frequency band. The amplifying sections 202a, 202b amplify the radio frequency signals to output to the transmission/reception antennas 201a, 202b. [0063] The radio base station apparatus 20 receives transmission waves transmitted from the user terminal apparatus 10 in the transmission/reception antennas 201a, 201b. The radio frequency signals received in the transmission/reception antennas 201a, 201b are amplified in the amplifying sections 202a, 202b, subjected to frequency conversion to be converted into baseband signals in the transmission/reception sections 203a, 203b, and are input to the baseband signal processing section 204.

The baseband signal processing section 204 performs FFT processing, IDFT processing, error correcting decoding, reception processing of MAC retransmission control, and reception processing of RLC layer and PDCP layer on the user data included in the baseband signal received in uplink. The decoded signal is transferred to the upper station apparatus 30 via the transmission path interface 206.

The call processing section 205 performs call processing such as setting and release of the communication channel, status management of the radio base station apparatus 20, and management of radio resources.

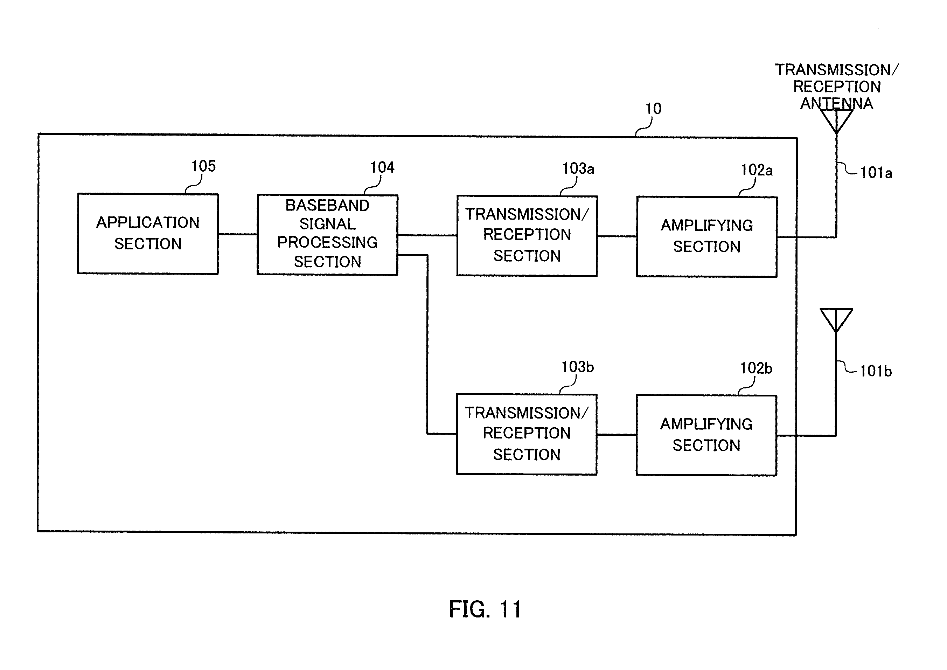

FIG. 11 is a block diagram to explain a configuration of the user terminal apparatus 10 according to this Embodiment. The user terminal apparatus 10 is provided with a plurality of transmission/reception antennas 101a and 101b for MIMO transmission, amplifying sections 102a and 102b, transmission/reception sections 103a and 103b, baseband signal processing section 104 and application section 105.

Radio frequency signals received in the transmission/reception antennas 101a, 101b are amplified in the amplifying sections 102a, 102b, and are subjected to frequency conversion to be converted into baseband signals in the transmission/reception sections 103a, 103b. The baseband signal is subj ected to FFT processing, error correcting decoding, reception processing of retransmission control, etc. in the baseband signal processing section 104. Among the data in downlink, the user data in downlink is transferred to the application section 105. The application section 105 performs processing concerning layers higher than the physical layer and MAC layer and the like. Further, among the data in downlink, the broadcast information is also transferred to the application section 105.

Meanwhile, with respect to user data in uplink, the application section 105 inputs the data to the baseband signal processing section 104. The baseband signal processing section 104 performs transmission processing of retransmission control (HARQ (Hybrid ARQ)), channel coding, precoding, DFT processing, IFFT processing and the like. The transmission/reception section 103 converts the frequency of the baseband signal output from the baseband signal processing section 104 into a radio frequency band. Then, the amplifying sections 102a, 102b amplify the frequency-converted radio frequency signals, and the signals are transmitted from the transmission/reception antennas 101a, 101b.

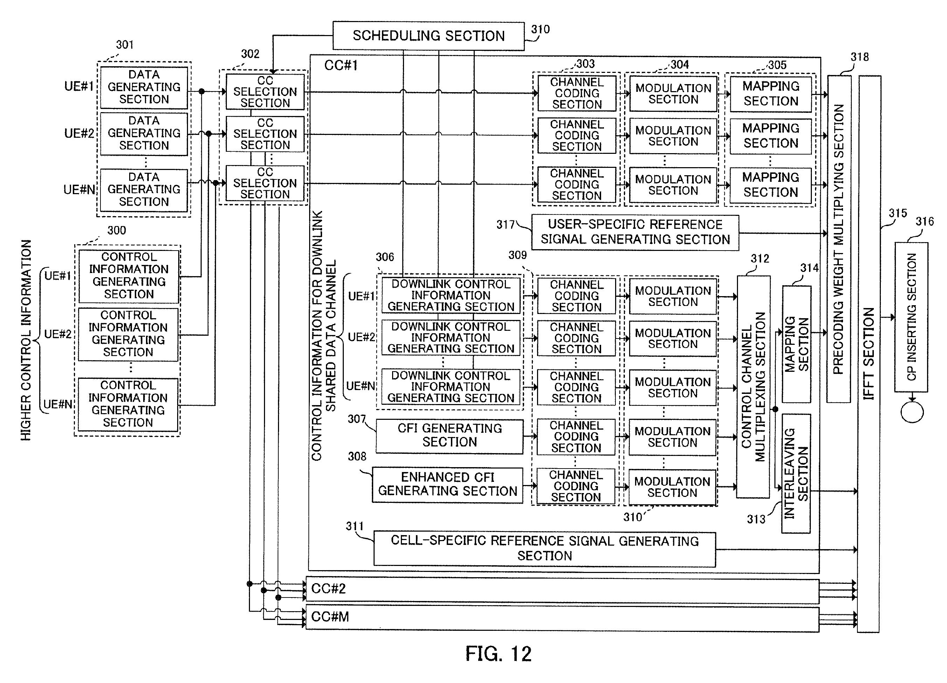

FIG. 12 is a functional block diagram of the baseband signal processing section 204 that the radio base station apparatus 20 has and a part of the higher layer according this Embodiment, and the baseband signal processing section 204 mainly shows functional blocks of a transmission processing section. FIG. 12 illustrates a base station configuration capable of supporting M (CC #1 to CC #M) component carriers. Transmission data to user terminal apparatuses 10 under control of the radio base station apparatus 20 is transferred from the upper station apparatus 30 to the radio base station apparatus 20.

A control information generating section 300 generates higher control signals transmitted and received by higher layer signaling (for example, RRC signaling). The higher control signals includestartingpositions (for example,"PDSCHStarting Position" and "PDSCH-Start") of downlink shared channels assigned to different component carriers by cross carrier scheduling. Further, the higher control signals include identification information (for example, "PHICH Duration") to identify whether the enhanced PHICH is applied.

A data generating section 301 outputs transmission data transferred from the upper station apparatus 30 as user data foreachuser. A component carrier selecting section302 selects a component carrier assigned to radio communications with the user terminal apparatus 10 for each user. The higher control signals and transmission data are allocated to a channel coding section of the corresponding component carrier, according to the component carrier assignment information set for each user in the component carrier selecting section 302.

A scheduling section 310 controls resource allocation in each component carrier. To the scheduling section 310 are input transmission data and retransmission instructions from the upper station apparatus 30, and a channel estimation value and CQI of a resource block from the reception section that measures the uplink reception signal.

The scheduling section 310 performs scheduling of downlink control information to each user terminal apparatus 10, while referring to the retransmission instructions input from the upper station apparatus 30, channel estimation value and CQI. The state of the propagation path in mobile communications varies for each frequency by frequency selective fading. Then, in transmitting the data, the scheduling section 310 assigns a resource block with good communication quality to the user terminal apparatus 10 for each subframe (called adaptive frequency scheduling). In adaptive frequency scheduling, a user terminal apparatus 10 of good propagation path quality is selected for each resource block and assigned. Therefore, the scheduling section 310 uses CQIs on a basis of a resource block transmitted from each user terminal apparatus 10 as feedback to assign the resource block expected to improve throughput.

The scheduling section 310 determines whether to transmit the downlink control information in the abode-mentioned PDCCH region or to multiplex with the PDSCH in the above-mentioned PDSCH region to transmit. Furthermore, for the downlink control information transmitted in the PDSCH region, the scheduling section 310 indicates a resource block (mapping position) with good communication quality for each subframe by adaptive frequency scheduling. Therefore, the scheduling section 310 uses CQIs on a basis of a resource block transmitted from each user terminal apparatus 10 as feedback to indicate the resource block (mapping position).

The scheduling section 310 controls the number of CCE aggregation corresponding to the propagation path conditions with the user terminal apparatus 10. The section 310 increases the number of CCE aggregation for a cell-edge user. Further, the section 310 determines an MCS (coding rate, modulation scheme) meeting a predetermined block error rate in the assigned resource block. Parameters satisfying the MCS (coding rate, modulation scheme) determined in the scheduling section 310 are set on channel coding sections 303, 309 and modulation sections 304, 310.

The baseband signal processing section 204 is provided with channel coding sections 303, modulation sections 304 and mapping sections 305 that support the maximum number N of multiplexed users in a single component carrier. The channel coding sections 303 perform channel coding on the user data (including a part of higher control signal) output from the data generating sections 301 for each user. The modulation sections 304 modulate the channel-coded user data for each user. The mapping sections 305 map the modulated user data to radio resources in the PDSCH region.

The baseband signal processing section 204 is provided with downlink control information generating sections 306 that generate downlink control information. The downlink control information generating sections 306 generate the downlink control signal transmitted on the PDCCH for each user terminal apparatus 10. The downlink control information includes PDSCH assignment information (DL Grant), PUSCH assignment information (UL Grant) and the like. For example, the PUSCH assignment information (UL Grant) is generated using a DCI format such as DCI Format 0/4, and for example, the PDSCH assignment information (DL Grant) is generated using a DCI format such as DCI Format 1A. When cross carrier scheduling is performed, to each DCI format is added an identification field (CIF) for identifying a cross carrier CC.

The baseband signal processing section 204 is provided with a CFI generating section 307 that generates a CFI. As described above, the CFI indicates the number of OFDM symbols constituting the PDCCH region of each subframe. The CFI value is varied between "1" and "3" based on the reception quality of a downlink signal in the user terminal apparatus 10 and the like.

The baseband signal processing section 204 is provided with an enhanced CFI generating section 308 that generates an enhanced CFI. As described above, the enhanced CFI is set to correspond to an OFDM symbol that is the starting position in the time domain of the enhanced PDCCH region. The enhanced CFI value is set based on the reception quality of the downlink signal in the user terminal apparatus or the like.

The baseband signal processing section 204 is provided with channel coding sections 309 and modulation sections 310 that support the maximum number N of multiplexed users in a single component carrier. The channel coding sections 309 perform channel coding on the downlink control information generated in the downlink control information generating sections 306 for each user terminal apparatus 10, while performing channel coding on the CFI generated in the CFI generating section 307 and the enhanced CFI generated in the enhanced CFI generating section 308. The modulation sections 310 modulate the downlink control information, CFI and enhanced CFI each subjected to channel coding.

A cell-specific reference signal generating section 311 generates a cell-specific reference signal (CRS: Cell-specific Reference Signal). The cell-specific reference signal (CRS) is multiplexed into radio resources of the above-mentioned PDCCH region to transmit. Further, a user-specific reference signal generating section 317 generates a user-specific downlink demodulation reference signal (DM-RS: DeModulation Reference Signal). The user specific downlink demodulation reference signal (DM-RS) is output to a precoding weight multiplying section 318 described later, and is multiplexed into radio resources of the above-mentioned PDSCH region to transmit.

The downlink control information modulated for each user in the above-mentioned modulation sections 310 is multiplexed in a control channel multiplexing section 312. In above-mentioned Aspect 1, as shown in FIG. 6, PDCCHs are multiplexed into first 1 to 3 symbols of the subframe, other PDCCHs are frequency-division multiplexed into the enhanced PDCCH region that is a part of the PDSCH region, the PCFICH is multiplexed into the first OFDM symbol of the subframe, and the enhanced PCFICH is multiplexed into the fourth (or subsequent) OFDM symbol from the beginning of the subframe. Further, in Aspect 2, as shown in FIG. 7, PDCCHs are multiplexed into first 1 to 3 symbols of the subframe as shown in FIG. 7, other PDCCHs are frequency-division multiplexed into the enhanced PDCCH region that is a part of the PDSCH region, the PCFICH is multiplexed into the first OFDM symbol of the subframe, and the enhanced PCFICH is multiplexed into the fourth or subsequent different OFDM symbols in a plurality of resource blocks. Furthermore, in Aspect 3, as shown in FIG. 8, PDCCHs are multiplexed into first 1 to 3 symbols of the subframe, other PDCCHs are frequency-division multiplexed into the enhanced PDCCH region that is a part of the PDSCH region, the PCFICH is multiplexed into the first OFDM symbol of the subframe (not shown), and the enhanced PCFICH is multiplexed into a plurality of resource elements (the fourth or subsequent from the beginning of the subframe) different in time and different frequency in the same resource block.

The downlink control information transmitted in the PDCCH region is output to an interleave section 313, and is interleaved in the interleave section 313. The downlink control information, which is time-division multiplexed with the user data in the PDSCH region, is output to a mapping section 314. The mapping section 314 maps the modulated user data to radio resources of the PDSCH region.

To the precoding weight multiplying section 318 is input the downlink control information output from the mapping section 314 and the user data output from the mapping section 305. Further, to the precoding weight multiplying section 318 is input the user-specific downlink demodulation reference signal (DM-RS) generated in the user-specific reference signal generating section 317. Based on the user-specific downlink demodulation reference signal (DM-RS), the precoding weight multiplying section 318 controls (shifts) the phase and/or amplitude of the transmission signal mapped to subcarriers. The transmission signal with the phase and/or amplitude shifted in the precoding weight multiplying section 318 is input to an IFFT section 315.

The downlink control information output from the interleave section 313 is input to the IFFT section 315. Furthermore, the cell-specific reference signal (CRS) generated in the cell-specific reference signal generating section 311 is input to the IFFT section 315. The IFFT section 315 performs fast Fourier transform on the input signal to transform the signal in the frequency domain into a time-series signal. A cyclic prefix inserting section 316 inserts a cyclic prefix into the time-seriessignalofthe downlink channel signal. In addition, the cyclic prefix functions as a guard interval to absorb the difference in multipath propagation delay. The transmission data with the cyclic prefix added is output to the transmission/reception section 203.

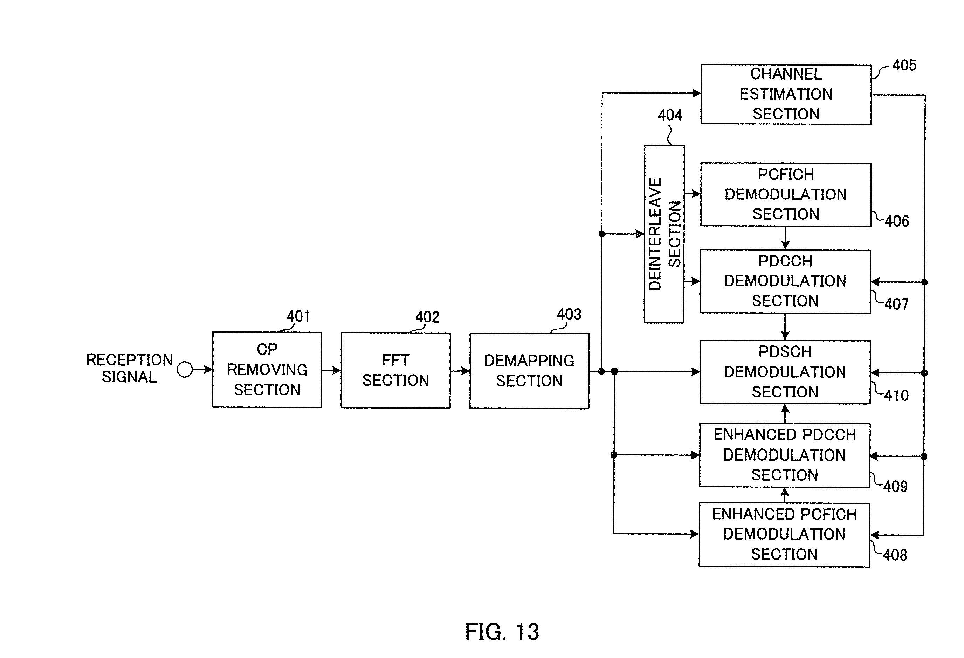

FIG. 13 is a functional block diagram of the baseband signal processing section 104 that the user terminal apparatus 10 has. In addition, the user terminal apparatus 10 is configured to be able to perform radio communications using a plurality of serving cells with different component carriers (CCs).

A CP removing section 401 removes the CP from a downlink signal received from the radio base station apparatus 20 as reception data. The CP-removed downlink signal is input to an FFT section 402. The FFT section 402 performs Fast Fourier Transform (FFT) on the downlink signal, and transforms the signal in the time domain into a signal in the frequency domain to output to a demapping section 403. The demapping section 403 demaps the downlink signal, and extracts the downlink control information (PCFICH and PDCCH) transmitted in the PDCCH region, and the user data (PDSCH) and downlink control information (enhanced PCFICH and enhanced PDCCH) transmitted in the PDSCH region. The downlink control information (PCFICH and PDCCH) extracted in the demapping section 403 is deinterleaved in a deinterleave section 404.

The baseband signal processing section 104 is provided with a channel estimation section 405, a PCFICH demodulation section 406 that demodulates the PCFICH, a PDCCH demodulation section 407 that demodulates the PDCCH, an enhanced PCFICH demodulation section 408 that demodulates the enhanced PCFICH, an enhanced PDCCH demodulation section 409 that demodulates the PDCCH transmitted in the PDSCH region, and a PDSCH demodulation section 410 that demodulates the PDSCH.

The channel estimation section 405 performs channel estimation using the cell-specific reference signal (CRS) or user-specific downlink demodulation reference signal (DM-RS). More specifically, using the cell-specific reference signal (CRS) multiplexed into the PDCCH region, the channel estimation section 405 performs channel estimation in the PDCCH region, and outputs the estimation result to the PDCCH demodulation section 407. Meanwhile, using the downlink demodulation reference signal (DM-RS) multiplexed into the PDSCH region, the channel estimation section 405 performs channel estimation in the PDSCH region, and outputs the estimation result to the enhanced PCFICH demodulation section 408, enhanced PDCCH demodulation section 409 and PDSCH demodulation section 410.

The PCFICH demodulation section 406 demodulates the PCFICH multiplexed into the first OFDM symbol of each subframe, and acquires the CFI indicative of the number of OFDM symbols constituting the PDCCH region. The PCFICH demodulation section 406 outputs the acquired CFI to the PDCCH demodulation section 407.

The PDCCH demodulation section 407 specifies the PDCCH region of each subframe, based on the CFI output from the PCFICH demodulation section 406, and demodulates the PDCCH multiplexed into the PDCCH region to perform blind decoding. Further, the PDCCH demodulation section 407 acquires the downlink control information to the apparatus 10 by blind decoding. As described above, the downlink control information includes the PDSCH assignment information (DL Grant). The PDCCH demodulation section 407 outputs the PDSCH assignment information (DL Grant) to the PDSCH demodulation section 410. In addition, the PDCCH demodulation section 407 performs the above-mentioned demodulation, using the channel estimation result by the cell-specific reference signal (CRS) in the channel estimation section 405.

The enhanced PCFICH demodulation section 408 demodulates the enhanced PCFICH multiplexed into the enhanced PCFICH of the subframe, and acquires the enhanced CFI indicative of the OFDM symbol that is a starting position in the time domain of the enhanced PDCCH region. In other words, in the case of assigning the enhanced PCFICH in above-mentioned Aspect 1, the section 408 demodulates the enhanced PCFICH multiplexed into the fourth (or subsequent) OFDM symbol from the beginning of the subframe, and acquires the enhanced CFI. In the case of assigning the enhanced PCFICH in Aspect 2, the section 408 demodulates the enhanced PCFICH multiplexed into the fourth or subsequent different symbols in a plurality of resource blocks, and acquires the enhanced CFI. In the case of assigning the enhanced PCFICH in Aspect 3, the section 408 demodulates the enhanced PCFICH multiplexed into a plurality of resource elements that are different in the time and frequency in the same resource block, and acquires the enhanced CFI. The enhanced PCFICH demodulation section 408 outputs the acquired enhanced CFI to the enhanced PDCCH demodulation section 409.

The enhanced PDCCH demodulation section 409 specifies a starting position in the time domain of the enhanced PDSCH region, based on the starting position by the enhanced CFI output from the enhanced PCFICH demodulation section 408. The enhanced PDCCH demodulation section 409 demodulates the PDCCH time-division multiplexed into OFDM symbols after the specified starting position to perform blind decoding. Further, the enhanced PDCCH demodulation section 409 acquires the downlink control information to the apparatus 10 by blind decoding, and outputs the PDSCH assignment information (DL Grant) to the PDSCH demodulation section 410.

In addition, the enhanced PDCCH demodulation section 409 performs the above-mentioned demodulation using the channel estimation result with the downlink demodulation reference signal (DM-RS) in the channel estimation section 405. The downlink demodulation reference signal (DM-RS) is a user-specific reference signal, and is to obtain beamforming gain. Therefore, demodulation using the downlink demodulation reference signal (DM-RS) enables an information amount capable of being transmitted per symbol to be increased, as compared with demodulation (demodulation in the PDCCH demodulation section 407) using the cell-specific reference signal (CRS), and is effective at increasing the capacity.

The PDSCH demodulation section 410 demodulates the PDSCH to the apparatus 10 multiplexed into the PDSCH region, based on the PDSCH assignment information output from the PDCCH demodulation section 407 or enhanced PDCCH demodulation section 409. As described above, the PDSCH includes the higher control signal, in addition to the user data.

The radio base station apparatus 20 of this Embodiment configured as described above multiplexes the PDCCH including the downlink control information generated in the downlink control information generating section 306 into the enhanced PDCCH region that is apart of the PDSCH region, while multiplexing the enhanced PCFICH including the enhanced CFI generated in the enhanced CFI generating section 308 into the enhanced PDCCH region. The user terminal apparatus 10 demodulates the enhanced PCFICH multiplexed into the enhanced PDCCH region in the enhanced PCFICHdemodulationsection408, specifies the starting position in the time domain of the enhanced PDCCH region, and demodulates the PDCCH multiplexed into the enhanced PDCCH region in the enhanced PDCCH demodulation section 409 to acquire the downlink control information.

In the case of assigning the enhanced PCFICH by above-mentioned Aspect 1, the radio base station apparatus 20 multiplexes the PDCCH including the downlink control information generated in the downlink control information generating section 306 into the enhanced PDCCH region that is a part of the PDSCH region, while multiplexing the enhanced PCFICH including the enhanced CFI generated in the enhanced CFI generating section 308 into the fourth (or subsequent) OFDM symbol from the beginning of the subframe. The user terminal apparatus 10 demodulates the enhanced PCFICH multiplexed into the fourth (or subsequent) OFDM symbol from the beginning of the subframe in the enhanced PCFICH demodulation section 408 , specifies the startingposition in the time domain of the enhanced PDCCH region, and demodulates the PDCCH multiplexed into the enhanced PDCCH region in the enhanced PDCCH demodulation section 409 to acquire the downlink control information.

In the case of assigning the enhanced PCFICH by above-mentioned Aspect 2, the radio base station apparatus 20 multiplexes the PDCCH including the downlink control information generated in the downlink control information generating section 306 into the enhanced PDCCH region that is a part of the PDSCH region, while multiplexing the enhanced PCFICH including the enhanced CFI generated in the enhanced CFI generating section 308 into the fourth or subsequent different OFDM symbols from the beginning of the subframe in a plurality of resource blocks. The user terminal apparatus 10 demodulates the enhanced PCFICH multiplexed into the fourth or subsequent different OFDM symbols in a plurality of resource blocks in the enhanced PCFICH demodulation section 408, specifies the starting position in the time domain of the enhanced PDCCH region, and demodulates the PDCCH multiplexed into the enhanced PDCCH region in the enhanced PDCCH demodulation section 409 to acquire the downlink control information.

In the case of assigning the enhanced PCFICH by above-mentioned Aspect 3, the radio base station apparatus 20 multiplexes the PDCCH including the downlink control information generated in the downlink control information generating section 306 into the enhanced PDCCH region that is a part of the PDSCH region, while multiplexing the enhanced PCFICH including the enhanced CFI generated in the enhanced CFI generating section 308 into a plurality of resources elements (the fourth and subsequent from the beginning of a subframe) different in time and frequency in the same resource block. The user terminal apparatus 10 demodulates the enhanced PCFICH multiplexed into a plurality of resources elements different in time and frequency in the same resource block in the enhanced PCFICH demodulation section 408, specifies the starting position in the time domain of the enhanced PDCCH region, and demodulates the PDCCH multiplexed into the enhanced PDCCH region in the enhanced PDCCH demodulation section 409 to acquire the downlink control information.

As described above, the radio base station apparatus 20 of the invention uses the enhanced PCFICH including the starting position information in the time domain of the enhanced PDCCH region, and is thereby capable of notifying of the starting position in the time domain of the enhanced PDCCH region with the PDCCH assignment region extended. Further, the user terminal apparatus 10 of the invention is capable of specifying the starting position in the time domain of the enhanced PDCCH region with the assignment region for the downlink control channel of the PDCCH extended. In other words, by the invention, actualized are radio communications with the downlink control channel assignment region enhanced, and provided are the radio base station apparatus, user terminal apparatus, radio communication system and radio communication method that enable the effect of improving usage efficiency of radio resources to be exerted sufficiently also in the case where the number of user terminals multiplexed into the same radio resources further increases.

The present invention is not limited to the above-mentioned Embodiment, and is capable of being carried into practice with various modifications thereof. For example, the connection relationship of structural elements, function and the like in the above-mentioned Embodiment are capable of being carried into practice with modifications thereof as appropriate. Further, the configurations shown in the above-mentioned Embodiment are capable of being carried into practice in combination as appropriate. Moreover, the invention is capable of being carried into practice with modifications thereof as appropriate without departing from the scope of the invention.

The present application is based on Japanese Patent Application No. 2011-103070 filedonMay2, 2011, entire content of which is expressly incorporated by reference herein.

## Claims

1. A radio base station apparatus that performs communications using a first resource region for a downlink control channel subj ected to time division, and a second resource region for a downlink data channel, comprising:
a generation section that generates a first notification signal for notifying of the number of OFDM symbols of the first resource region, and a second notification signal for notifying of a starting position in the time domain of a third resource region obtained by performing frequency division on a part of the second resource region; and
a multiplexing section that multiplexes the first notification signal into the first resource region, and the second notification signal into the third resource region.

2. The radio base station apparatus according to claim 1, wherein the multiplexing section multiplexes the second notification signal into a fourth OFDM symbol or subsequent OFDM symbol from a beginning of a subframe.

3. The radio base station apparatus according to claim 1, wherein the multiplexing section multiplexes the second notification signal into a fourth OFDM symbol from a beginning of a subframe.

4. The radio base station apparatus according to claim 1, wherein the multiplexing section multiplexes the second notification signal into different OFDM symbols in a plurality of resource blocks.

5. The radio base station apparatus according to claim 1, wherein the multiplexing section multiplexes the second notification signal into a plurality of resource elements with same time different in frequency in a same resource block.

6. The radio base station apparatus according to claim 1, wherein the multiplexing section multiplexes the second notification signal into a plurality of resource elements different in time and frequency in a same resource block.

7. A user terminal apparatus that performs communications using a first resource region for a downlink control channel subjected to time division, and a second resource region for a downlink data channel, comprising:
a demodulation section that demodulates a first notification signal for notifying of the number of OFDM symbols of the first resource region, and a second notification signal for notifying of a starting position in the time domain of a third resource region obtained by performing frequency division on a part of the second resource region, while demodulating a downlink control signal based on the first notification signal and the second notification signal each subjected to demodulation.

8. The user terminal apparatus according to claim 7, wherein the demodulation section demodulates the second notification signal multiplexed into a fourth OFDM symbol or subsequent OFDM symbol from a beginning of a subframe.

9. The user terminal apparatus according to claim 7, wherein the demodulation section demodulates the second notification signal multiplexed into a fourth OFDM symbol from a beginning of a subframe.

10. The user terminal apparatus according to claim 7, wherein the demodulation section demodulates the second notification signal multiplexed into different OFDM symbols in a plurality of resource blocks.

11. The user terminal apparatus according to claim 7, wherein the demodulation section demodulates the second notification signal multiplexed into a plurality of resource elements with same time different in frequency in a same resource block.

12. The user terminal apparatus according to claim 7, wherein the demodulation section demodulates the second notification signal multiplexed into a plurality of resource elements different in time and frequency in a same resource block.

13. A radio communication system for performing communications using a first resource region for a downlink control channel subj ected to time division, and a second resource region for a downlink data channel, comprising:
a radio base station apparatus having a generation section that generates a first notification signal for notifying of the number of OFDM symbols of the first resource region, and a second notification signal for notifying of a starting position in the time domain of a third resource region obtained by performing frequency division on a part of the second resource region, and
a multiplexing section that multiplexes the first notification signal into the first resource region, and the second notification signal into the third resource region to transmit a downlink signal; and
a user terminal apparatus having a demodulation section that demodulates the first notification signal and the second notification signal each from the received downlink signal, while demodulating a downlink control signal based on the first notification signal and the second notification signal each subjected to demodulation.

14. A radio communication method using a first resource region for a downlink control channel subjected to time division, and a second resource region for a downlink data channel, comprising:
in a radio base station apparatus, generating a first notification signal for notifying of the number of OFDM symbols of the first resource region, and a second notification signal for notifying of a starting position in the time domain of a third resource region obtained by performing frequency division on a part of the second resource region;
multiplexing the first notification signal into the first resource region, and the second notification signal into the third resource region to transmit a downlink signal; and
in a user terminal apparatus, demodulating the first notification signal and the second notification signal each from the received downlink signal, while demodulating a downlink control signal based on the first notification signal and the second notification signal each subjected to demodulation.
